# EUROPÄISCHE PATENTSCHRIFT

(11) **EP 0 564 403 B1**
(45) Veröffentlichungstag und Bekanntmachung des Hinweises auf die Patenterteilung: **12.06.1996**
(21) Anmeldenummer: 93810204.3
(22) Anmeldetag: 22.03.1993
(51) Int. Cl.: B60P 1/64, G02B 6/12

(54) **Vorrichtung zum Laden und Entladen eines Ladungsträgers an einem Fahrzeug**
Device for loading and unloading a cargo-carrier on a vehicle
Dispositif de chargement et de déchargement d'un porte-charges sur un véhicule

(30) Priorität: 31.03.1992 CH 1033/92
(43) Veröffentlichungstag der Anmeldung: 06.10.1993
(73) Patentinhaber: TUCHSCHMID AG, CH-8500 Frauenfeld (CH)
(72) Erfinder: Rossi, Willi, CH-8500 Frauenfeld (CH)
(74) Vertreter: Wenger, René

(56) Entgegenhaltungen:
- EP-A- 0 188 280
- EP-A- 0 221 600
- WO-A-50/00787
- FR-A- 1 543 515
- FR-A- 2 155 043

## Beschreibung

Die Erfindung betrifft eine Vorrichtung zum Laden und Entladen eines Ladungsträgers an einem Fahrzeug gemäss dem Oberbegriff von Anspruch 1.

Namentlich im Zusammenhang mit dem kombinierten Transport Schiene/Strasse ist es seit einigen Jahren bekannt, standardisierte Ladungsträger wie z.B. Container, Schüttgutsilos und dergleichen mit einem sogenannten Wechselgerät direkt von einem Bahnwagen auf einen Lastkraftwagen zu transferieren bzw. vom Boden aufzunehmen oder wieder auf den Boden abzusetzen. Diese Wechselgeräte sind auf der Ladebrücke eines LKW's montiert und erlauben das Handhaben schwerer Lasten durch eine einzige Person, nämlich durch den LKW-Fahrer. Während die Ladungsträger auf internationaler Ebene vereinheitlicht wurden (DIN 1025/1026), haben sich bei den Wechselgeräten in der Praxis zwei Typen entwickelt, nämlich die Kettengeräte und die Hakengeräte.

Ein typisches Kettengerät ist beispielsweise durch die EP-A-221 600 bekannt geworden. Das Kettengerät hat einen hydraulisch verschwenkbaren Kipprahmen, der am hinteren Ende der Ladebrücke angelenkt ist. In der Ebene des Kipprahmens ist eine endlose Zugkette montiert, welche in beiden Richtungen antreibbar ist. An der Zugkette ist eine Aufnahmekette befestigt, an deren Ende eine Klaue angeordnet ist. Diese Klaue kann einen an der Stirnseite des Ladungsträgers in Bodennähe angeordneten Anhängebolzen ergreifen. Die Aufnahmekette dient dazu, den Ladungsträger bis auf die Höhe des Kipprahmens hochzuziehen, wonach der Ladungsträger auf den Kipprahmen gezogen wird. Bei der Aufnahme eines Ladungsträgers vom Boden wird der Kipprahmen schräggestellt. Bei der Übernahme eines Ladungsträgers von einem Bahnwagen oder von einem anderen LKW bleibt der Kipprahmen in der horizontalen Position.

Bei den Hakengeräten ist ebenfalls eine Art Kipprahmen auf der Ladebrücke montiert. für die Aufnahme des Ladungsträgers ist jedoch keine Kette, sondern ein hydraulisch verschwenkbarer Greifarm mit einem Haken vorgesehen. Dieser Haken kann einen an der Stirnseite des Ladungsträgers im oberen Bereich angeordneten Bügel erfassen und auf diese Weise den Ladungsträger hochheben und auf den Kipprahmen aufziehen. Auch mit den Hakengeräten ist selbstverständlich ein Transfer vom Bahnwagen auf den LKW möglich. Ein typisches Hakengerät ist beispielsweise in der EP-A-192 689 beschrieben.

Ein Nachteil der bisher bekannten Wechselgeräte besteht darin, dass jedes Gerät bestimmte Vor- und Nachteile aufweist. Je nach der Beschaffenheit des Ladungsträgers und der darin enthaltenen Ladung und je nach den örtlichen Gegebenheiten kann entweder der Einsatz des Kettengeräts oder des Hakengeräts zweckmässiger sein. Ein Transportunternehmer wird sich dagegen nicht beide Typen von Wechselgeräten anschaffen, sondern sich für einen Typ entscheiden, zumal die Ladungsträger so beschaffen sind, dass sie von beiden Wechselgeräten bedient werden können. Dieser Zustand ist jedoch äusserst unbefriedigend, da nie optimale Bedingungen für einen bestimmten Typ angetroffen werden. So kann je nach den Verhältnissen beim Laden eines Ladungsträgers das Hakengerät zweckmässiger sein, während beim Entladen des gleichen Ladungsträgers besser das Kettengerät verwendet würde.

Durch die WO 85/00787, welche als nächstliegender Stand der Technik betrachtet wird, ist bereits eine Vorrichtung zum Laden und Entladen eines Ladungsträgers bekannt geworden, bei der auf der Ladebrücke verschiedene Greifmittel vorgesehen sind. Auf einem entlang der Ladebrücke verschiebbaren Schlitten sind zwei Greifmittel angeordnet, die unabhängig voneinander und an verschiedenen Stellen der Ladung eingesetzt werden können. Der Schlitten lässt sich jedoch nur über einen Seilzug und eine Seilwinde bewegen, wobei die Ladung bei arretiertem Schlitten auch noch direkt an den Seilzug angehängt werden kann. Je nach Einsatz des gewünschten Greifmittels und je nachdem, ob die Ladung auf die Ladebrücke aufgenommen oder von dieser abgeschoben werden soll, ist bei dieser Vorrichtung jedoch ein relativ umständliches und zeitraubendes Umspannen des Seilzuges erforderlich. Im Gegensatz zur endlosen Zugkette stellt der Seilzug ausserdem eine latente Unfallgefahr dar, so dass sich derartige Vorrichtungen in der Praxis nicht durchgesetzt haben.

Es ist daher Aufgabe der Erfindung, eine Vorrichtung der eingangs genannten Art zu schaffen, welche die Vorteile der beiden im Einsatz verbreiteten Wechselgerättypen vereinigt und welche der Bedienungsperson die freie Wahl lässt, je nach den örtlichen Verhältnissen den Ladungsträger mit der Klaue oder mit dem Haken aufzunehmen. Diese Aufgabe wird erfindungsgemäss mit einer Vorrichtung gelöst, welche die Merkmale im Anspruch 1 aufweist.

Der über die Zugkette in beiden Bewegungsrichtungen antreibbare Schlitten mit dem verschwenkbaren Greifarm erlaubt nicht nur wahlweise den Einsatz des Hakens, sondern er ermöglicht es auch, den Greifarm auf dem Schlitten in eine optimale Position zu fahren. Bei den bekannten Hakengeräten war der Greifarm nämlich in der Regel auf dem Kipprahmen fest angelenkt und nicht verschiebbar. Um den Haken überhaupt am Ladungsträger einhängen zu können, war daher eine komplizierte Schwenkbewegung erforderlich. Der Schlitten ermöglicht es nun, den Ladungsträger mit dem Greifarm gleichzeitig anzuheben und mit dem Schlitten zu ziehen. Beim Kettenbetrieb bleibt der Schlitten mit dem Greifarm in einer Ruheposition und behindert den Ladevorgang bzw. den Entladevorgang in keiner Weise.

Zur Verschiebung des Schlittens weist dieser eine lösbare Kupplung für die direkte oder indirekte Verbindung mit der Zugkette auf. Diese Kupplung könnte beispielsweise manuell eingerückt werden. Vorzugsweise weist die Kupplung jedoch hydraulisch oder pneumatisch aktivierbare Verriegelungsbolzen auf, welche in die Glieder der Zugkette und/oder in die Klaue einfahrbar sind. für das Ziehen des Schlittens kann die Kraft auch direkt mit der Klaue übertragen werden, welche am Schlitten einhängt.

Besonders vorteilhaft lässt sich der Ladungsträger vom Boden aufheben, wenn an der Zugkette eine Aufnahmekette befestigt ist, an deren Ende die Klaue angeordnet ist. Ein Schiebeelement an der Zugkette und/oder an der Klaue stellt die kraftschlüssige Verbindung zwischen Zugkette und Klaue her. Auf diese Weise kann über die Klaue eine Last problemlos mit Hilfe der Zugkette von der Ladebrücke abgeschoben werden. Die Klaue könnte aber auch über ein Gestänge oder über einen Bügel mit der Zugkette verbunden sein, oder sie könnte in bestimmten fällen sogar direkt an der Zugkette befestigt sein.

Besonders vorteilhaft weist der Schlitten zwei Schlittenschenkel auf, die über einen Jochbogen miteinander verbunden sind, so dass die Zugkette zwischen den Schlittenschenkeln verläuft und der Jochbogen die Zugkette überspannt. Die beiden Schlittenschenkel ergeben eine optimale Seitenstabilität, wobei die Zugkette genau in der Mitte der Ladebrücke angeordnet ist. Eine besonders stabile Führung ergibt sich dabei, wenn die Schlittenschenkel an den einander zugewandten Innenseiten Gleitklötze aufweisen, welche in U-förmigen Führungsschienen geführt sind, deren Schenkel parallel zur Ebene des Kipprahmens verlaufen. Mit diesen einfachen konstruktiven Mitteln können auch hohe Drehmomente vom Schlitten auf den Kipprahmen übertragen werden. Selbstverständlich wären aber auch andere Führungsmittel wie z.B. Rollen denkbar.

Eine besonders vorteilhafte Konstruktion für die Führung des Schlittens und für die Führung der Zugkette ergibt sich, wenn der Kipprahmen einen hohlkastenförmigen Kippbalken aufweist, der das Gestell für die Zugkette bildet und wenn auf beiden Seiten des Kippbalkens wenigstens je eine Führungsschiene angeordnet ist. Selbstverständlich könnte die Schlittenführung aber auch an mehreren Führungsschienen erfolgen.

Der Schlitten ist vorzugsweise mit einem Anschlag für den Ladungsträger versehen. Damit kann sichergestellt werden, dass sich der Ladungsträger in der Ladungsposition immer in einer korrekten Endstellung befindet. Gleichzeitig bildet aber so der Schlitten einen verstellbaren Anschlag für den Ladungsträger, welcher exakt der Länge des Ladungsträger angepasst werden kann. Ein auf diese Weise verstellbarer Anschlag war bei konventionellen Kettengeräten nicht bekannt. Zur festen Verriegelung kann der Schlitten mit einem Steckbolzen am Kipprahmen arretierbar sein.

Beim Erfassen des Ladungsträgers mit dem Haken wird die Klaue nicht benötigt. Sie kann daher in eine Ruhestellung hinter die Ebene des Anschlags fahrbar sein, so dass sie nicht störend in Erscheinung tritt. Umgekehrt wird der Haken bzw. der ganze Greifarm beim Kettenbetrieb nicht benötigt. Er wird daher besonders vorteilhaft in eine Ruhestellung gefahren, in welcher der Haken aus einer vertikalen, parallel zur Schwenkachse des Greifarms verlaufenden Ebene vom Ladungsträger weggeneigt ist. Da der Bügel des Ladungsträgers in der Ladeposition auf der gleichen Höhe liegt wie der Haken, wird durch das Wegkippen des Hakens bzw. des ganzen Greifarms eine Kollision mit dem Bügel zuverlässig verhindert.

Besonders vorteilhaft lässt sich die ganze Anlage steuern, wenn am Schlitten Sensoren für die Positionserkennung der Klaue und/oder des Greifarms und/oder des Ladungsträgers angeordnet sind. Auf diese Weise wird auch ein optimaler Grad an Betriebssicherheit erreicht, da die Bedienungsperson den jeweiligen Betriebszustand immer sofort erkennen kann.

Weitere Einzelmerkmale und Vorteile der Erfindung ergeben sich aus der nachfolgenden Beschreibung eines Ausführungsbeispiels und aus den Zeichnungen. Es zeigen:
- Figur 1: eine perspektivische Darstellung einer erfindungsgemässen Vorrichtung auf einer Ladebrücke,
- Figur 2: eine perspektivische Darstellung eines Schlittens ohne Greifarm,
- Figur 3: eine perspektivische Darstellung einer an sich bekannten Klaue,
- Figur 4: einen Schnitt durch den Schlitten gemäss Figur 2 mit Einzelheiten der Verriegelung,
- Figur 5: eine der im Schlitten eingebauten Verriegelungsvorrichtungen,
- Figur 6: einen Querschnitt durch den Kipprahmen mit aufgerichtetem Greifarm,
- Figur 7: eine Seitenansicht auf den Greifarm gemäss Figur 6 in der Ladestellung "Haken",
- Figur 8: eine Seitenansicht auf den Greifarm gemäss Figur 7 in der Aufnahmestellung "Haken",
- Figur 9: eine Seitenansicht der Vorrichtung in der Aufnahmestellung "Klaue",
- Figur 10: die Vorrichtung gemäss Figur 9 beim Hochziehen des Ladungsträgers,
- Figur 11: die Vorrichtung gemäss Figur 9 in der Ladestellung "Klaue",
- Figur 12: eine Seitenansicht der Vorrichtung in der Aufnahmestellung "Haken",
- Figur 13: die Vorrichtung gemäss Figur 12 beim Hochziehen des Ladungsträgers,
- Figur 14: die Vorrichtung gemäss Figur 9 in der Ladestellung "Haken", und
- Figur 15: die Seitenansicht eines Fahrzeugs mit verkürztem Ladungsträger.

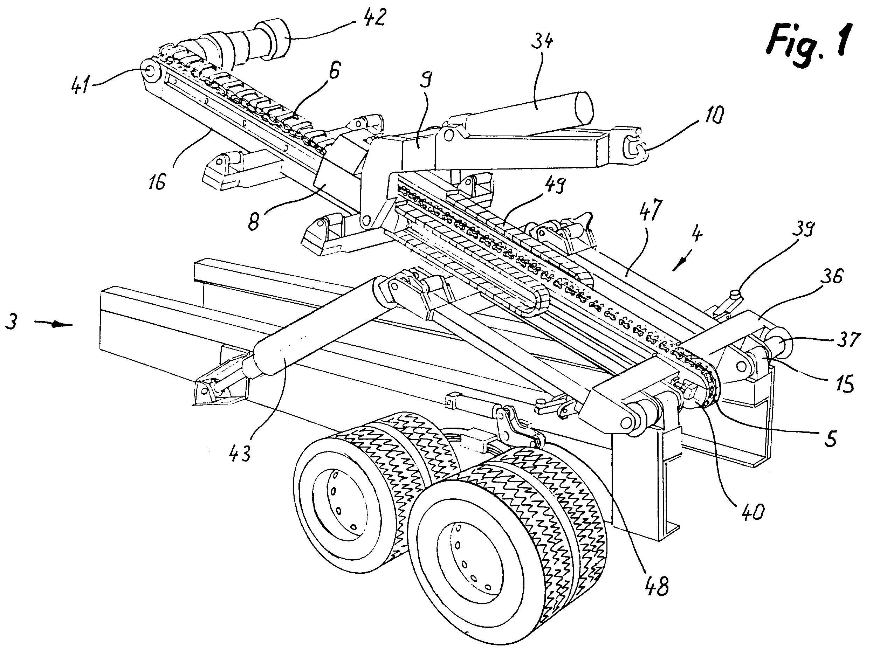

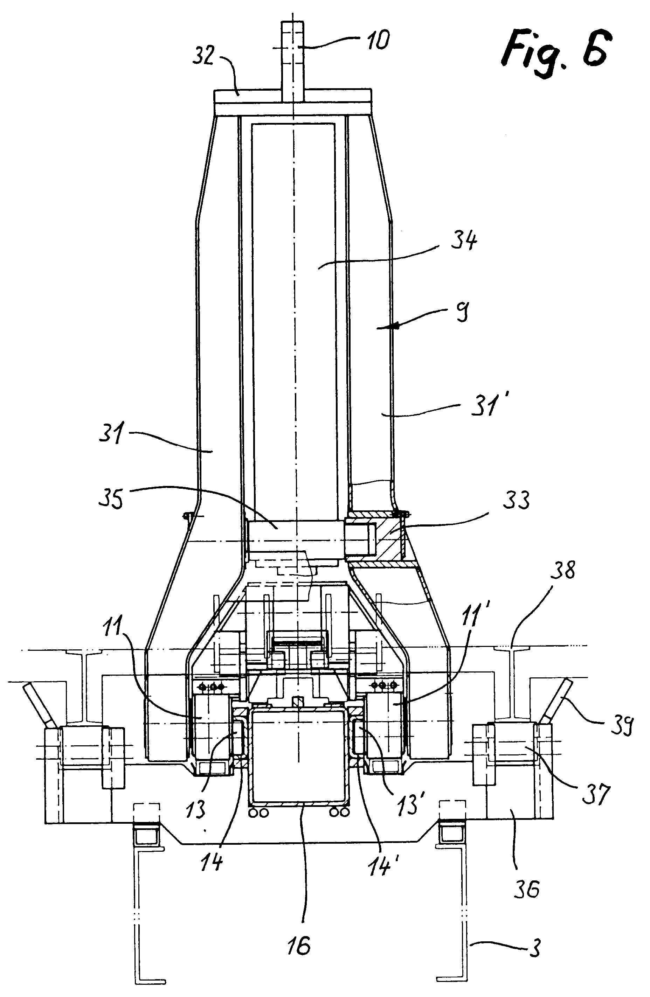

Figur 1 zeigt die Ladebrücke 3 eines hier nicht näher dargestellten Fahrzeuges, an welcher ein Kipprahmen 4 angelenkt ist. Der Kipprahmen ist dabei um Kipprahmengelenke 15 am hinteren Rand der Ladebrücke schwenkbar, wozu Hydraulikzylinder 43 auf beiden Seiten der Ladebrücke eingesetzt werden. Der Kipprahmen besteht im wesentlichen aus einem hohlkastenförmigen Balken 16 (Figur 6) an dem in bestimmten Abständen Rahmenquerträger 36 angeordnet sind. Diese Rahmenquerträger tragen im äusseren Bereich Rollen 37, auf denen die Tragprofile 38 eines Ladungsträgers abgerollt werden können. Um im Bereich der Krafteinleitung durch die beiden Hydraulikzylinder 43 eine bessere Verwindungssteifigkeit zu erhalten, sind die beiden hintersten Rahmenquerträger mit Längsholmen 47 verbunden.

Der Kippbalken 16 dient auch als Gestell für die endlose Zugkette 5, die zwischen einem vorderen Kettenumlenkrad 41 und einem hinteren Kettenumlenkrad 40 gespannt ist. Das obere Trum der Zugkette liegt dabei auf dem Kippbalken 16. Der Antrieb der Zugkette erfolgt über einen hydraulischen Kettenantriebsmotor 42, welcher direkt an das vordere Kettenumlenkrad angeflanscht ist. Die an der Zugkette 5 befestigte Aufnahmekette 6 liegt auf der Zugkette auf, wobei in Figur 1 die am Ende der Aufnahmekette befestigte Klaue nicht sichtbar ist, da sie innerhalb des Schlittens 8 liegt.

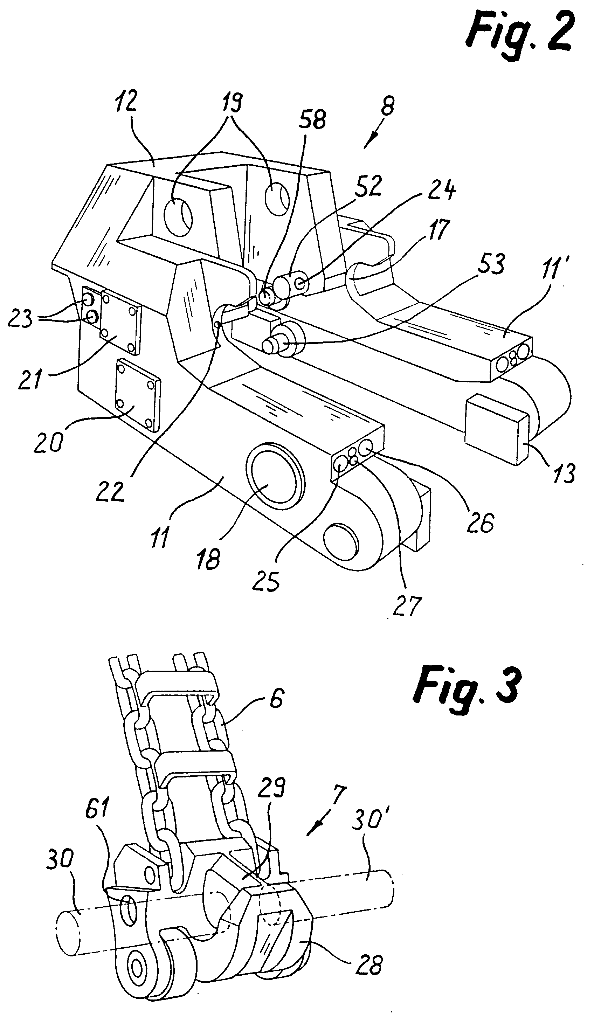

Der Schlitten 8 wird auf beiden Seiten des Kippbalkens 16 geführt und er wird über die Zugkette 5 angetrieben. Am Schlitten ist ein L-förmiger Greifarm 9 angelenkt, an dessen Ende ein Haken 10 angeordnet ist. Die Schwenkbewegung des Greifarms erfolgt über einen Hydraulikzylinder 34. Weitere Einzelheiten der Kombination Schlitten/Greifarm sind aus den Figuren 2 bis 8 ersichtlich.

An der Vorrichtung sind ferner an sich bekannte Mittel zur Sicherung des Ladungsträgers und des Fahrzeuges angeordnet. So können seitliche Sicherungshebel 39 eingeklappt werden, um ein Abheben des Ladungsträgers vom Kipprahmen zu verhindern. Mit einer Hinterachsabstützung 48 wird eine Entlastung der Hinterräder bei der Lastaufnahme erreicht.

Anhand der Figuren 2 bis 5 werden zunächst Einzelheiten des Schlittens erläutert. Wie Figur 2 zeigt, besteht der Schlitten 8 im wesentlichen aus den beiden parallelen Schlittenschenkeln 11 und 11', welche über einen etwas erhöhten Jochbogen 12 miteinander verbunden sind. An den sich zugewandten Innenseiten der Schlittenschenkel 11, 11' sind auf jeder Seite wenigstens zwei Gleitklötze 13 befestigt. Die Stirnseite des Jochbogens 12 bildet im Bereich des Übergangs in die Schlittenschenkel einen halbkreisförmigen Anschlag 17, dessen Funktion nachstehend noch genauer erläutert wird. An der Oberseite des Jochbogens ist ein Lager 19 zum Abstützen der Kolben-/Zylindereinheit zum Verschwenken des Greifarms angeordnet. Der Greifarm selbst dreht sich in Lagerbüchsen 18 in den beiden Schlittenschenkeln. Seitlich sind am Schlitten je eine Kupplungsvorrichtung 21 für die direkte oder indirekte kraftschlüssige Verbindung des Schlittens mit der Zugkette und eine Verriegelungsvorrichtung 20 zum Verriegeln des Schlittens angeordnet. Verschiedene Sensoren geben Aufschluss über den Betriebszustand der Vorrichtung. So ermittelt ein Sensor 22, ob der Ladungsträger seine Endposition am Anschlag 17 erreicht hat. Die beiden Sensoren 23 ermitteln die Lage des Greifarms und der Sensor 24 ermittelt die Lage der Klaue.

Der Sensor 24 ist auf einem Anschlagbolzen 52 angeordnet, der zusammen mit einem axial gegenüberliegenden Anschlagbolzen als Anschlag für die Klaue dient. Dadurch müssen beim Ziehen des Schlittens die Verriegelungsbolzen 58 nicht die gesamte Last tragen. Die beiden Anschlagbolzen entsprechen bezüglich Lage und Durchmesser den Anhängebolzen 30, 30' (Figur 3) eines Ladungsträgers. Die Zugkraft wird daher über den Haken 28 der Klaue 7 auf den Schlitten 8 übertragen, wenn der Ladungsträger am Greifarm 9 hängt.

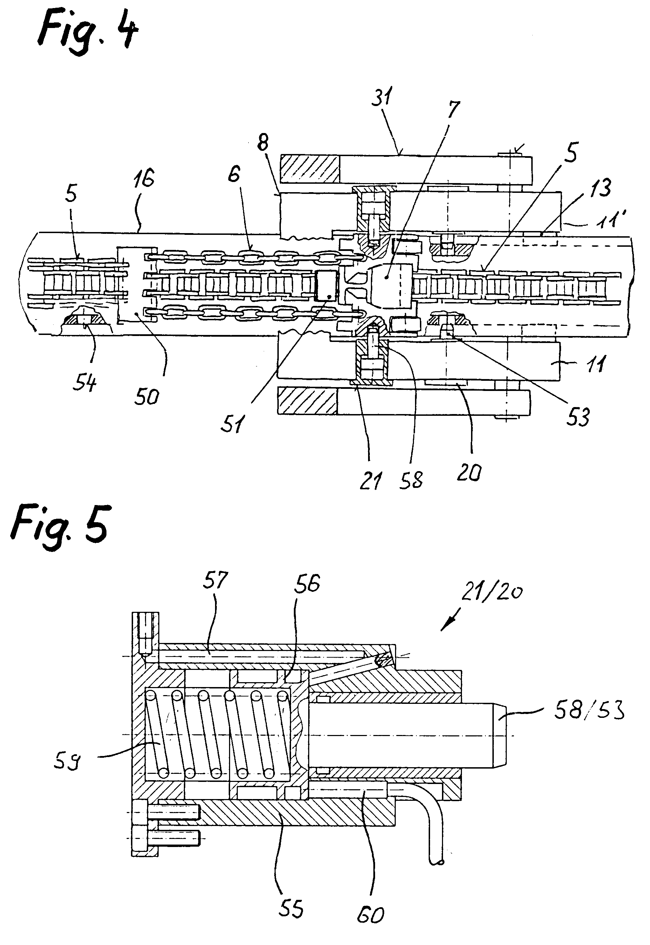

Figur 4 zeigt Einzelheiten der am Schlitten 8 möglichen Verriegelungen und Kupplungen. Die Aufnahmekette 6 ist mittels einer Kettenverbindung 50 mit der endlosen Zugkette 5 verbunden. Aus Sicherheitsgründen ist die Zugkette auf der gesamten möglichen Strecke zwischen dem vorderen Kettenumlenkrad 41 und der Kettenverbindung 50 verstärkt ausgebildet. Ein auf der Zugkette 5 befestigter Schiebenocken 51 sorgt dafür, dass die Kräfte an der Zugkette auch bei reversiertem Antrieb auf die Klaue 7 übertragen werden. Anstelle des Schiebenokkens könnte aber auch ein anderes Schiebeelement treten, das an der Zugkette 5 oder an der Klaue 7 befestigt ist.

Wie dargestellt sind in beiden Schlittenschenkeln 11 und 11' Kupplungsvorrichtungen 21 für die kraftschlüssige Verbindung zwischen dem Schlitten 8 und der Zugkette 5 vorgesehen. Diese Kupplungsvorrichtungen greifen seitlich in die Klaue 7, könnten aber auch in die Kettenglieder der Zugkette 5 eingreifen. Auf die gleiche Weise sind an beiden Schlittenschenkeln Verriegelungsvorrichtungen 20 für die Verriegelung des Schlittens am Kippbalken 16 angeordnet. Diese Verrriegelungsvorrichtungen sind praktisch gleich ausgebildet wie die Kupplungsvorrichtungen 21. Die Steckbolzen 53 der Verriegelungsvorrichtungen 20 können in Bohrungen 54 eingesteckt werden, die in regelmässigen Abständen am Kippbalken 16 vorgesehen sind.

Figur 5 zeigt den Aufbau einer Verriegelungsvorrichtung 20 bzw. einer Kupplungsvorrichtung 21. In einem Druckmittelzylinder 55 ist ein Kolben 56 geführt, an dem der Bolzen 53 bzw. 58 befestigt ist. Der Kolben 56 steht unter der Vorspannung einer Druckfeder 59, welche den Bolzen 53/58 immer in Eingriffsstellung presst. Diese Schliessstellung wird über einen Sensor 60 oder Endschalter ermittelt und einer Steuervorrichtung gemeldet. Über eine Druckleitung 57 kann der Kolben 56 beaufschlagt werden, so dass er sich gegen die Kraft der Druckfeder 59 verschiebt. Dabei wird der Bolzen 53/58 in eine Öffnungsstellung gebracht. Der Kolben 56 kann je nach Einzelfall hydraulisch oder pneumatisch betätigt werden.

Beim Kettenbetrieb sind die Kupplungsvorrichtungen 21 immer gelöst und der Schlitten 8 ist mit den Verriegelungsvorrichtungen 20 am Kippbalken 16 verriegelt. Dagegen sind die Verriegelungsvorrichtungen 20 beim Hakenbetrieb gelöst und die Kupplungsvorrichtungen 21 stehen im Eingriff, so dass der Schlitten 8 über die Zugkette 5 entlang des Kippbalkens 16 bewegt werden kann.

An der Stirnseite der Schlittenschenkel 11, 11' sind Anschlüsse für verschiedene Versorgungsleitungen vorgesehen. Die Anschlüsse 25, 26 und 27 können Hydraulikleitungen, Pneumatikleitungen oder Stromleitungen aufnehmen. Diese Leitungen werden in einer Gliederkette oder Energiekette 49 geführt, welche in Figur 1 angedeutet ist. Die Versorgung des Schlittens mit Energie- und Steuerleitungen erfolgt damit problemlos unabhängig von der Relativlage des Schlittens. Der feste Ansatzpunkt der Energiekette 49 ist so gewählt, dass er etwa in der Mitte des Kippbalkens 16 liegt. Auf diese Weise ist die Energiekette in beiden Endpositionen des Schlittens 8 voll ausgefahren.

Figur 3 zeigt eine Klaue 7, die am Ende der Aufnahmekette 6 angeordnet ist. Die Klaue besteht aus dem eigentlichen Haken 28 und dem in der Mitte angeordneten Zentriersteg 29. Damit kann die Klaue die Anhängebolzen 30, 30' an der unteren Stirnseite eines Ladungsträgers ergreifen. Der oben keilförmige Zentriersteg 29 dringt in den Zwischenraum zwischen den Anhängebolzen 30, 30'. In der Ladestellung liegen die Anhängebolzen 30, 30' am Anschlag 17 an. Der Anschlag an dieser Stelle erfolgt unabhängig davon, ob der Ladungsträger mit der Klaue oder mit dem Haken aufgenommen wird. Seitlich sind an der Klaue Bohrungen 61 angebracht, in welche die Verriegelungsbolzen 58 eindringen können.

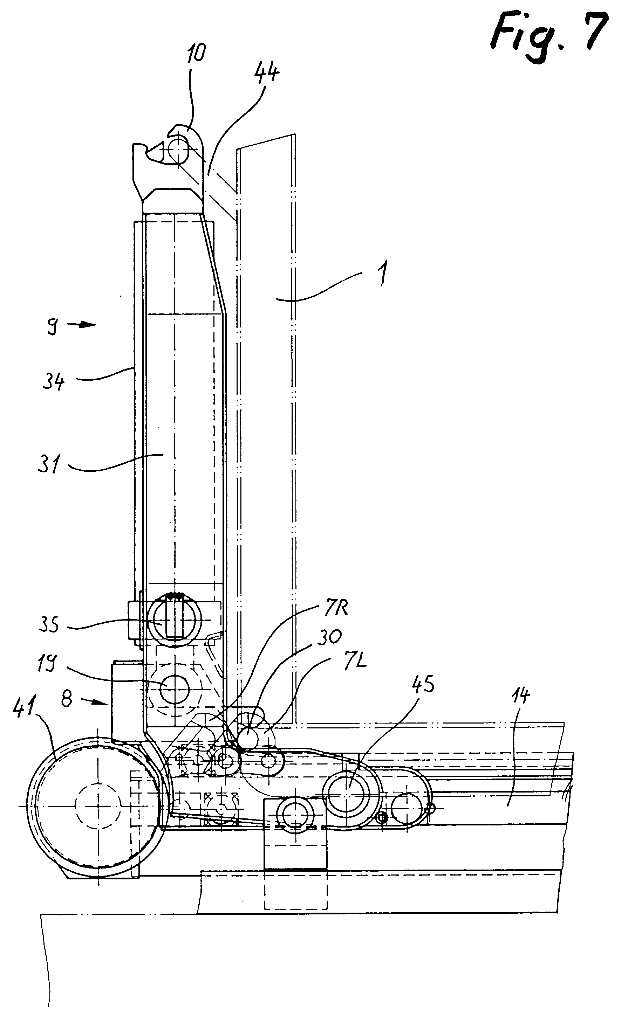

Aus den Figuren 6 und 7 sind weitere Einzelheiten der Schlittenführung und des Greifarms ersichtlich. Beim Kippbalken 16 handelt es sich um ein im Querschnitt annähernd quadratisches Hohlkastenprofil. Die Rahmenquerträger 36 sind unten an den Kippbalken angeschweisst. Aus dieser Darstellung ist auch sichtbar, wie die Tragprofile 38 eines Ladungsträgers auf den Rollen 37 aufliegen. Auf beiden Seiten des Kippbalkens 16 ist je eine U-förmige Führungsschiene 14 angeschweisst und zwar so, dass die Profilschenkel parallel zur Ebene des Kipprahmens verlaufen. In diesen Führungsschienen 14 und 14' gleiten die Gleitklötze 13, 13' des Schlittens, wobei der Schlitten ersichtlicherweise sowohl in der Ebene des Kipprahmens, als auch in einer vertikalen Ebene geführt ist. Zur Verstärkung der Führungsschienen können auf beiden Seiten Stabilisierungsprofile aufgeschweisst werden.

Der Greifarm 9 ist etwa gabelförmig ausgebildet und besteht aus den beiden etwa L-förmigen Greifarmschenkeln 31 und 31', die am freien Ende mit einem Verbindungsholm 32 verbunden sind. An diesem Verbindungsholm ist der eigentliche Haken 10 angeordnet. Die gelenkige Verbindung mit dem Schlitten 8 erfolgt über Lagerzapfen 45, die von aussen in die in Figur 2 dargestellten Lagerbüchsen 18 eingreifen. Zwischen den beiden Greifarmschenkeln 31 ist ein Hydraulikzylinder 34 angeordnet, und zwar mit einem Lagerzapfen 35, der in Lagerbüchsen 33 eingreift. Die Abstützung des Hydraulikzylinders 34 erfolgt am Gelenklager 19 auf dem Schlitten 8. Wie aus Figur 5 ersichtlich ist, verläuft der Hydraulikzylinder bei vertikal aufgerichtetem Greifarm etwa parallel zu letzterem.

Aus Figur 7 sind auch die beiden möglichen Positionen der Klaue 7 sichtbar. In der Ladeposition ist der Schlitten bei Hakenbetrieb und bei Kettenbetrieb in die vordere Endstellung nahe beim Kettenumlenkrad 41 gefahren. Figur 5 zeigt die Ladestellung "Haken", bei welcher der Haken 10 den Bügel 44 an der oberen Stirnseite des Ladungsträgers 1 erfasst. In dieser Position darf die Klaue den unteren Bereich des Ladungsträgers, an dem der Anhängebolzen 30 angeordnet ist, nicht behindern. Die Klaue wird daher in eine Ruhestellung 7R zurückgezogen, in welcher sie sich hinter der Ebene des Anschlags 17 unter dem Jochbogen 12 (Figur 2) befindet. Wird jedoch der Ladungsträger 1 mit der Klaue am Anhängebolzen 30 ergriffen, so steht die Klaue in der Ladeposition 7L. Dann muss jedoch der Greifarm 9 weggekippt werden, damit der Haken 10 den Bügel 44 nicht behindert.

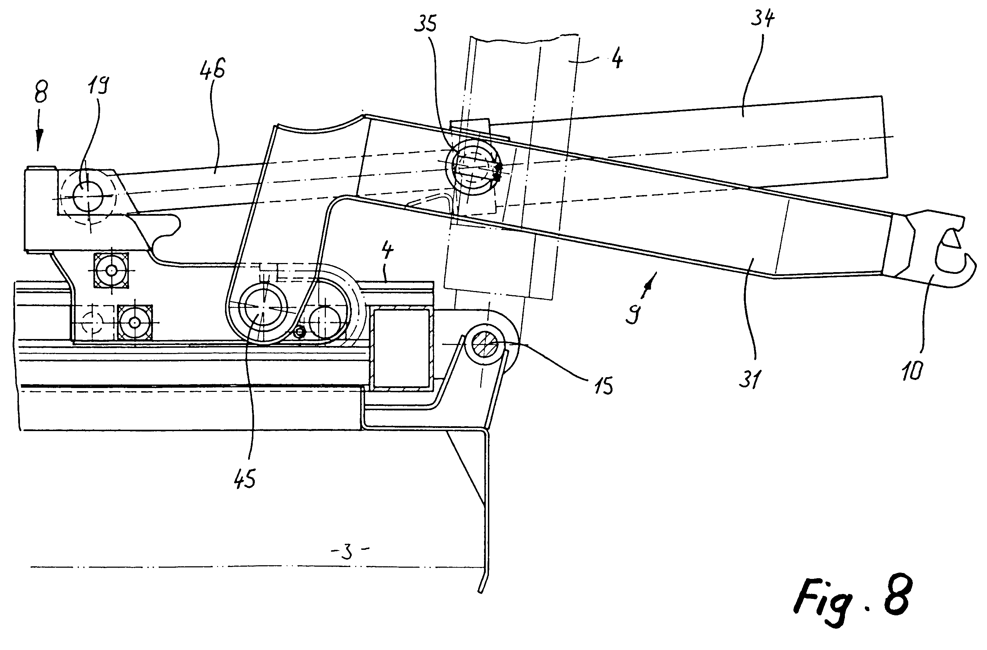

Figur 8 zeigt den Schlitten 8 in der hinteren Endposition nahe beim Kipprahmengelenk 15. Der Greifarm 9 ist ausgeschwenkt, so dass die Kolbenstange 46 sichtbar wird. Der Haken 10 befindet sich jetzt fast etwa auf der Ebene der Ladebrücke 3. Selbstverständlich kann der Haken 10 noch weiter abgesenkt werden, indem der Kipprahmen 4 hochgeschwenkt wird. Die maximal mögliche Schwenkstellung des Kipprahmens ist durch strichpunktierte Linien angedeutet.

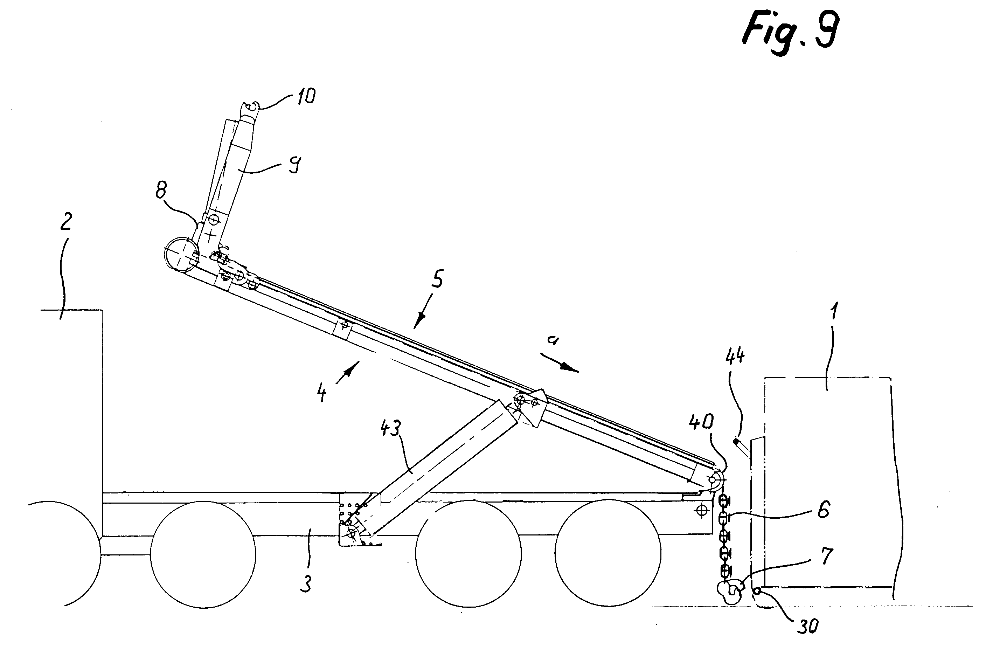

Anhand der Figuren 6 bis 11 wird die Aufnahme eines Ladungsträgers 1 mit der Klaue erläutert. Das Fahrzeug 2 fährt mit seiner Ladebrücke 3 nahe an die Stirnseite des Ladungsträgers 1. Der Kipprahmen 4 wird mit Hilfe des Hydraulikzylinders 43 etwas angehoben, um die Übernahme der Ladung zu erleichtern. Anschliessend wird die Zugkette 5 in Pfeilrichtung a bewegt, bis die Aufnahmekette 6 mit der Klaue 7 über das hintere Kettenumlenkrad 40 herabhängt. Der Schlitten 8 mit dem Greifarm 9 bleibt dabei in einer Ruheposition, da er nicht benötigt wird. Die Klaue 7 wird mit dem Anhängebolzen 30 verbunden und die Vorrichtung ist jetzt bereit zur Aufnahme der Last.

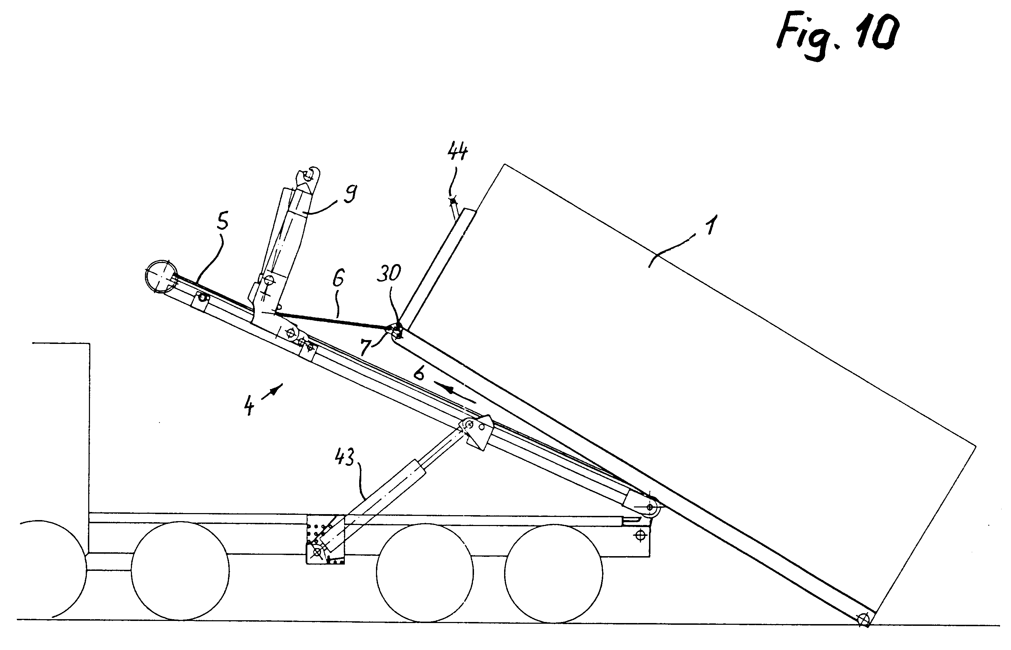

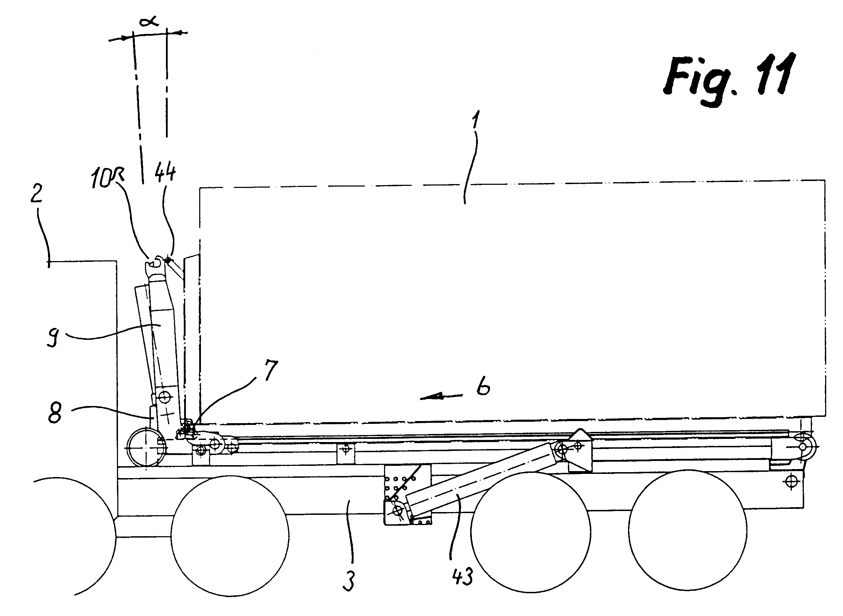

Die Zugkette 5 wird jetzt in Pfeilrichtung b angetrieben, wobei zunächst der Ladungsträger 1 mit der Aufnahmekette 6 bis auf das Niveau des Kipprahmens 4 angehoben wird. Dann erfolgt das Aufziehen auf den Kipprahmen (Fig. 10) und zwar soweit, bis der Anhängebolzen 30 am Anschlag 17 des Schlittens 8 anschlägt. Wie aus Figur 11 besonders deutlich sichtbar ist, wurde der Haken in eine Ruhestellung 10R zurückgeschwenkt, in der er um den Winkel α zur Senkrechten geneigt ist. Nach oder während dem Aufziehen des Ladungsträgers 1 wird der Hydraulikzylinder 43 wieder entlastet, so dass der Kipprahmen 4 in seine Ruhelage zurückschwenkt. Nach der Sicherung des Ladungsträgers durch die bereits erwähnten Sicherungsmittel ist das Fahrzeug 2 fahrbereit.

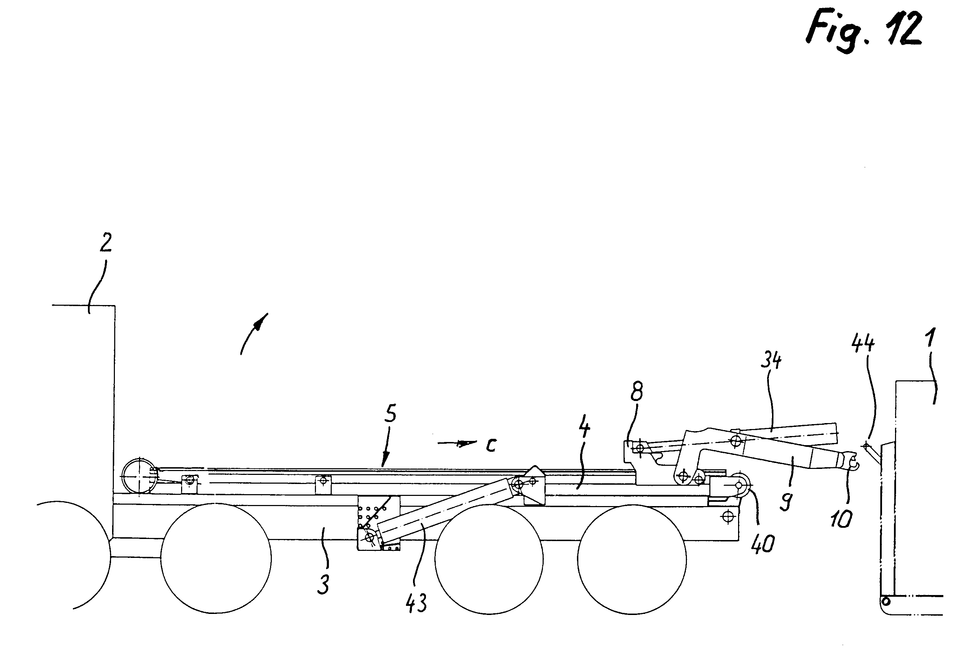

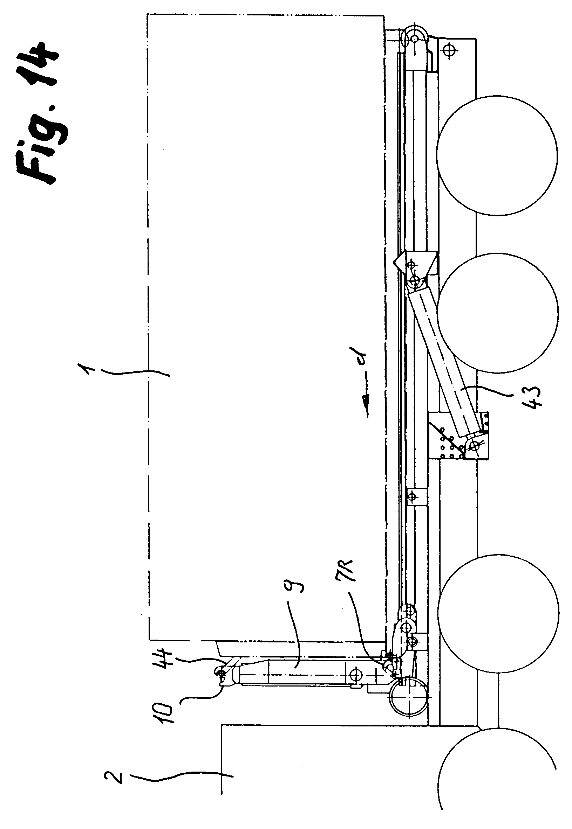

Die Figuren 12 bis 14 zeigen den Ladevorgang beim Hakenbetrieb. Das Fahrzeug 2 fährt mit seiner Ladebrücke wiederum an die Stirnseite des Ladungsträgers 1 heran, jedoch nicht ganz so nahe wie beim Kettenbetrieb. Der Schlitten 8 wird mit Hilfe der Zugkette 5 in die hinterste Position gefahren und der Greifarm 9 wird durch Aktivierung des Hydraulikzylinders 34 ausgeschwenkt. Gleichzeitig muss auch noch der Kipprahmen 4 hochgeschwenkt werden. Der Haken 10 wird in den Bügel 44 eingeklinkt, wonach die Vorrichtung für die Lastaufnahme bereit ist.

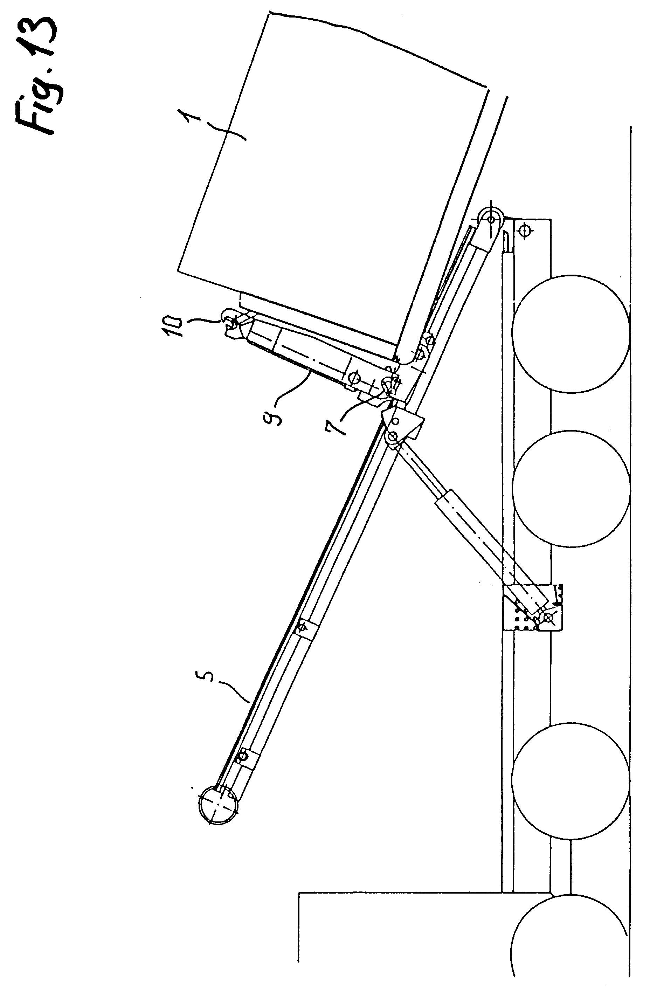

Der Greifarm 9 wird zurückgeschwenkt, wobei auch der Ladungsträger 1 eine bogenförmige Schwenkbewegung ausführt und dabei auf den Kipprahmen 4 gehoben wird (Fig. 13). Jetzt kann der Schlitten in Pfeilrichtung d in die vordere Endlage bewegt werden, wobei der Ladungsträger 1 am Haken 10 in seine endgültige Transportstellung gezogen wird. Die in dieser Stellung nicht benötigte Klaue befindet sich in der bereits erwähnten Ruhestellung 7R. Beim Entladen des Ladungsträgers 1 wird sowohl im Hakenbetrieb, als auch im Kettenbetrieb jeweils in umgekehrter Reihenfolge verfahren. Beim Umladen eines Ladungsträgers auf einen Bahnwagen bzw. von einem Bahnwagen entfällt das Anheben des Kipprahmens 4 bzw. das Absenken des Ladungsträgers mit dem Greifarm 9 oder mit der Aufnahmekette 6.

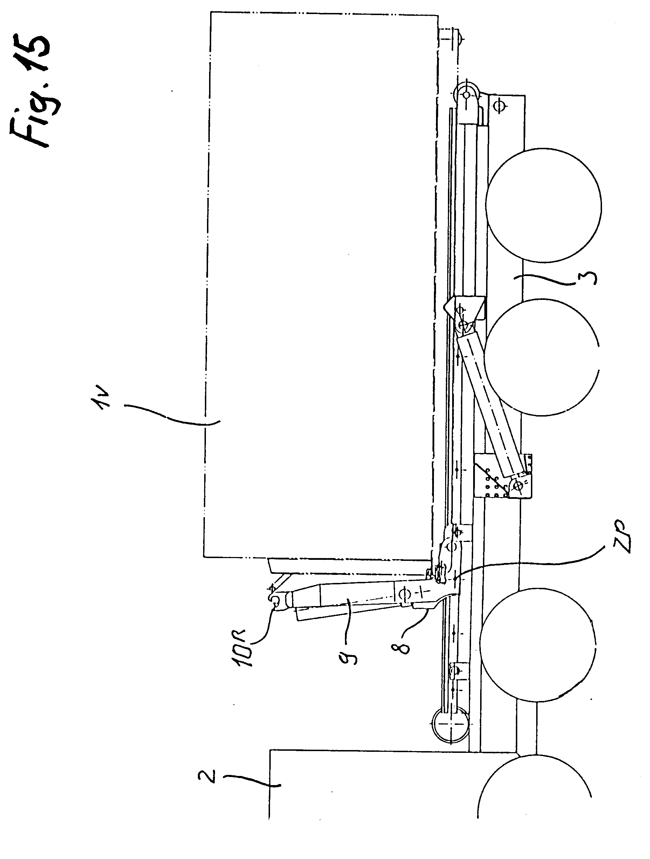

Die Figur 15 zeigt eine Ladeposition mit einem verkürzten Ladungsträger 1v. Um diesen verkürzten Ladungsträger mit der Klaue aufnehmen zu können, wurde der Schlitten 8 in der Zwischenposition zp verriegelt. Der Schlitten bildet so ersichtlicherweise einen verschiebbaren Anschlag, der je nach Länge des Ladungsträgers in verschiedenen Positionen verriegelt werden könnte. Es wäre sogar denkbar, dass der Greifarm 9 abmontiert werden könnte, so dass der Schlitten 8 ausschliesslich nur noch die Funktion eines verschiebbaren Anschlags für den Ladungsträger hat.

## Patentansprüche

1. Vorrichtung zum Laden und Entladen eines Ladungsträgers (1) an einem Fahrzeug (2) mit einem an einer Ladebrücke (3) angelenkten Kipprahmen (4), an dem ein Schlitten (8) verschiebbar gelagert ist, an dem ein schwenkbarer Greifarm (9) angelenkt ist, an dessen Ende ein mit dem Ladungsträger verbindbarer Haken (10) angeordnet ist, und ferner mit einer auf dem Kipprahmen angeordneten und ebenfalls mit dem Ladungsträger verbindbaren Klaue (7), wobei der Ladungsträger (1) wahlweise mit dem Haken (10) oder mit der Klaue (7) erfassbar ist, dadurch gekennzeichnet, dass in der Ebene des Kipprahmens eine endlose Zugkette (5) zum Aufziehen bzw. Abschieben des Ladungsträgers gespannt ist, an welcher die Klaue (7) befestigt ist, dass der Schlitten (8) in beiden Bewegungsrichtungen über die Zugkette antreibbar ist und dass der Schlitten eine lösbare Kupplung für die direkte oder indirekte Verbindung mit der endlosen Zugkette (5) aufweist.

2. Vorrichtung nach Anspruch 1, dadurch gekennzeichnet, dass an der Zugkette (5) eine Aufnahmekette (6) befestigt ist, an deren Ende die Klaue (7) angeordnet ist, und dass bei auf der Zugkette aufliegender Klaue die kraftschlüssige Verbindung zwischen Zugkette und Klaue durch ein Schiebeelement (51) an der Zugkette und/oder an der Klaue herstellbar ist.

3. Vorrichtung nach einem der Ansprüche 1 oder 2, dadurch gekennzeichnet, dass der Schlitten (8) zwei Schlittenschenkel (11, 11') aufweist, die über einen Jochbogen (12) miteinander verbunden sind und dass die Zugkette (5) zwischen den Schlittenschenkeln verläuft, wobei der Jochbogen (12) die Zugkette überspannt.

4. Vorrichtung nach Anspruch 3, dadurch gekennzeichnet, dass die Schlittenschenkel (11, 11') an den einander zugewandten Innenseiten Gleitklötze (13, 13') aufweisen, welche in U-förmigen Führungsschienen (14, 14') geführt sind, deren Schenkel parallel zur Ebene des Kipprahmens verlaufen.

5. Vorrichtung nach Anspruch 4, dadurch gekennzeichnet, dass der Kipprahmen einen hohlkastenförmigen Kippbalken (16) aufweist, der das Gestell für die Zugkette (5) bildet, und dass auf beiden Seiten des Kippbalkens wenigstens je eine Führungsschiene (14, 14') angeordnet ist.

6. Vorrichtung nach einem der Ansprüche 1 bis 5, dadurch gekennzeichnet, dass die Kupplung durch wenigstens einen Druckmittelzylinder gebildet wird, der einen Verriegelungsbolzen aufweist, welcher in die Glieder der Zugkette (5) und/oder in die Klaue 7 einfahrbar ist.

7. Vorrichtung nach einem der Ansprüche 1 bis 6, dadurch gekennzeichnet, dass der Schlitten (8) einen Anschlag (17) für den Ladungsträger aufweist bzw. bildet.

8. Vorrichtung nach Anspruch 7, dadurch gekennzeichnet, dass die Klaue (7) beim Erfassen des Ladungsträgers (1) mit dem Haken (10) in eine Ruhestellung hinter die Ebene des Anschlags (17) fahrbar ist.

9. Vorrichtung nach einem der Ansprüche 1 bis 8, dadurch gekennzeichnet, dass der Schlitten (8) mit wenigstens einem hydraulisch oder pneumatisch aktivierbaren Steckbolzen am Kipprahmen (4) arretierbar ist.

10. Vorrichtung nach einem der Ansprüche 1 bis 9, dadurch gekennzeichnet, dass der Greifarm (9) beim Erfassen des Ladungsträgers (1) mit der Klaue (7) in eine Ruhestellung fahrbar ist, in welcher der Haken (10) aus einer vertikalen, parallel zur Schwenkachse des Greifarms verlaufenden Ebene vom Ladungsträger weggeneigt ist.

11. Vorrichtung nach Anspruch 3, dadurch gekennzeichnet, dass der etwa L-förmig ausgebildete Greifarm (9) an den Schlittenschenkeln (11, 11') angelenkt ist, und dass der Greifarm mit einem Druckmittelzylinder (34) antreibbar ist, der am Jochbogen (12) abgestützt ist.

12. Vorrichtung nach einem der Ansprüche 1 bis 11, dadurch gekennzeichnet, dass am Schlitten (8) Sensoren (22, 23, 24) für die Positionserkennung der Klaue (7) und/oder des Greifarms (9) und/oder des Ladungsträgers (1) angeordnet sind.

13. Vorrichtung nach Anspruch 3, dadurch gekennzeichnet, dass der Schlitten (8) an Steuerleitungen angeschlossen ist, welche in wenigstens einer beweglichen Gliederkette geführt sind, die parallel zur Zugkette (5) verläuft und welche an die Stirnseite wenigstens eines Schlittenschenkels (11) angekoppelt ist.

## Claims

1. Device for loading and unloading of a load-carrying unit (1) on a vehicle (2), with a tilting-frame (4) mounted to articulate on a chassis (3), a carriage being mounted to displace on said tilting-frame (4), a pivotable grabbing-arm (9) being mounted to articulate on said carriage, a hook (10), which can be brought into connection with the load-carrying unit, being mounted on the end of said grabbing-arm, and further with a claw (7), which can likewise be brought into connection with the load-carrying unit, being arranged on said tilting-frame, wherein the load-carrying (1) unit can be selectively grasped with the hook (10) or with the claw (7), characterized in that a continuous traction chain (5) for pulling on or pushing off the load-carrying unit is stretched in the plane of the tilting-frame, the claw (7) being mounted on said traction chain, that the carriage (8) is able to be driven in both movement directions via the traction chain, and that the carriage possesses a disconnectable coupling for direct or indirect connection with the continuous traction chain (5).

2. Device according to claim 1, characterised in that a pick-up chain (6), on the end of which the claw (7) is arranged, is fixed to the traction chain (5) and that, when the claw is resting on the traction chain, an interlocking connection can be attained between the traction chain and the claw by means of a sliding element (51) on the traction chain and/or on the claw.

3. Device according to one of the claims 1 to 2, characterised in that the carriage (8) possesses two carriage limbs (11, 11') which are connected together by means of a yoke (12) and that the traction chain (5) runs between the carriage limbs, wherein the yoke (12) spans the traction chain.

4. Device according to claim 3, characterised in that the carriage limbs (11, 11') possess sliding blocks (13, 13') on their mutually facing inner sides, said blocks being guided within U-shaped guide-rails (14, 14'), the longitudinal axes of which run parallel to the plane of the tilting-frame.

5. Device according to claim 4, characterised in that the tilting-frame possesses a hollow box-section tilting-beam (16) which forms the framework for the traction chain (5), and that at least one guide-rail (14, 14') is arranged on each side of the tilting-beam.

6. Device according to one of the claims 1 to 5, characterised in that the coupling is attained by at least one pressure cylinder which possesses a locking pin which can be inserted into the links of the traction chain (5) and/or into the claw (7).

7. Device according to one of the claims 1 to 6, characterised in that the carriage (8) possesses or takes the form of a mechanical stop (17) for the load-carrying unit.

8. Device according to claim 7, characterised in that the claw (7) is able to be moved into a rest position behind the plane of the mechanical stop (17) during grasping of the load-carrying unit (1) with the hook (10).

9. Device according to one of the claims 1 to 8, characterised in that the carriage (8) is able to be locked to the tilting-frame (4) with at least one insert-pin which can be hydraulically or pneumatically activated.

10. Device according to claims 1 to 9, characterised in that, during grasping of the load-carrying unit (1) by the claw (7), the grabbing-arm (9) is able to be moved into a rest position in which the hook (10) is inclined away from the load-carrying unit, out of a vertical plain which runs parallel to the pivoting axis of the grabbing-arm.

11. Device according to claim 3, characterised in that the approximately L-shaped grabbing-arm (9) is mounted to articulate on the carriage limbs (11, 11'), and that the grabbing-arm is able to be driven by a pressure cylinder (34) which is supported by the yoke (12).

12. Device according to one of the claims 1 to 11, characterised in that sensors (22, 23, 24) for detecting the position of the claw (7) and/or the grabbing-arm (9) and/or the load-carrying unit (1) are arranged on the carriage (8).

13. Device according to claim 3, characterised in that the carriage (8) is connected to control lines which are guided within at least one moveable link chain which runs parallel to the traction chain (5) and is coupled to the facing side of at least one carriage limb (11).

## Revendications

1. Dispositif pour le chargement et le déchargement d'un porte-charge (1) sur un véhicule (2), comportant un châssis à bascule (4) qui est articulé à une plate-forme de chargement (3) et sur lequel est monté, mobile, un chariot (8) auquel est articulé un bras de préhension pivotant (9), un crochet (10) apte à être relié au porte-charge étant disposé à l'extrémité du bras de préhension (9), et un crampon (7) disposé sur le châssis à bascule et apte à être relié lui aussi au porte-charge, étant précisé que le porte-charge (1) peut être saisi au choix avec le crochet (10) ou avec le crampon (7), caractérisé en ce qu'il est prévu, pour hisser et évacuer le porte-charge, une chaîne de traction sans fin (5) qui est tendue dans le plan du châssis à bascule et à laquelle est fixé le crampon (7), en ce que le chariot (8) est apte à être entraîné par l'intermédiaire de la chaîne de traction dans les deux sens de mouvement, et en ce que le chariot comporte un accouplement amovible pour la liaison directe ou indirecte avec la chaîne de traction sans fin (5).

2. Dispositif selon la revendication 1, caractérisé en ce qu'il est prévu une chaîne de réception (6) qui est fixée à la chaîne de traction (5) et à l'extrémité de laquelle est disposé le crampon (7), et en ce que, lorsque le crampon est posé sur la chaîne de traction, la liaison par force entre la chaîne de traction et le crampon peut être réalisée grâce à un élément coulissant (51) au niveau de la chaîne de traction et/ou du crampon.

3. Dispositif selon l'une des revendications 1 ou 2, caractérisé en ce que le chariot (8) comporte deux branches de chariot (11, 11') qui sont reliées par un arceau (12), et en ce que la chaîne de traction (5) s'étend entre les branches du chariot, l'arceau (12) couvrant la chaîne de traction.

4. Dispositif selon la revendication 3, caractérisé en ce que les branches de chariot (11, 11') comportent, sur leurs côtés intérieurs tournés l'un vers l'autre, des glisseurs (13, 13') qui sont guidés dans des rails de guidage en U (14, 14') dont les branches sont parallèles au plan du châssis à bascule.

5. Dispositif selon la revendication 4, caractérisé en ce que le châssis à bascule comporte une poutre à bascule en forme de caisson (16) qui forme le bâti pour la chaîne de traction (5), et en ce qu'au moins un rail de guidage (14, 14') est disposé de chaque côté de la poutre à bascule.

6. Dispositif selon l'une des revendications 1 à 5, caractérisé en ce que l'accouplement est formé par au moins un vérin à commande par pression qui comporte un axe de verrouillage apte à s'engager dans les maillons de la chaîne de traction (5) et/ou dans le crampon 7.

7. Dispositif selon l'une des revendications 1 à 6, caractérisé en ce que le chariot (8) comporte ou forme une butée (17) pour le porte-charge.

8. Dispositif selon la revendication 7, caractérisé en ce que le crampon (7), lorsque le porte-charge (1) est saisi par le crochet (10), est apte à être amené dans une position de repos derrière le plan de la butée (17).

9. Dispositif selon l'une des revendications 1 à 8, caractérisé en ce que le chariot (8) est apte à être bloqué au niveau du châssis à bascule (4) à l'aide d'au moins un axe d'enfichage apte à être actionné par voie hydraulique ou pneumatique.

10. Dispositif selon l'une des revendications 1 à 9, caractérisé en ce que le bras de préhension (9), lorsque le porte-charge (1) est saisi par le crampon (7), est apte à être amené dans une position de repos dans laquelle le crochet (10) est incliné et éloigné du porte-charge à partir d'un plan vertical parallèle au pivot du bras de préhension.

11. Dispositif selon la revendication 3, caractérisé en ce que le bras de préhension approximativement en L (9) est articulé aux branches de chariot (11, 11'), et en ce que le bras de préhension est apte à être entraîné grâce à un vérin à commande par pression (34) qui est supporté par l'arceau (12).

12. Dispositif selon l'une des revendications 1 à 11, caractérisé en ce qu'il est prévu sur le chariot (8) des détecteurs (22, 23, 24) pour identifier la position du crampon (7) et/ou du bras de préhension (9) et/ou du porte-charge (1).

13. Dispositif selon la revendication 3, caractérisé en ce que le chariot (8) est raccordé à des lignes de commande qui sont guidées dans au moins une chaîne à maillons mobile parallèle à la chaîne de traction (5) et accouplée au côté frontal d'au moins une branche de chariot (11).
